Europäisches Patentamt

European Patent Office

Office européen des brevets

(11) Veröffentlichungsnummer: **0 110 144**
A2

(12) **EUROPÄISCHE PATENTANMELDUNG**

(21) Anmeldenummer: 83110753.7

(22) Anmeldetag: 27.10.83

(51) Int. Cl.³: **A 47 C 7/02**, A 47 C 7/74

(30) Priorität: 30.11.82 DE 3244228

(43) Veröffentlichungstag der Anmeldung: 13.06.84
Patentblatt 84/24

(84) Benannte Vertragsstaaten: **AT BE CH DE FR GB IT LI NL SE**

(71) Anmelder: **Schaeffler Teppichboden GmbH, Jäckstrasse 3, D-8600 Bamberg (DE)**

(72) Erfinder: **Schwerdtfeger, Peter, Gleusdorf 64, D-8601 Untermerzbach (DE)**

(74) Vertreter: **Gaiser, Hartmut, Dipl.-Ing., Sulzbacher Strasse 39, D-8500 Nürnberg 20 (DE)**

(54) Sitzaufbau.

Ein Sitz eines Nutzfahrzeugs soll einerseits wasserdicht und anderseits luftdurchlässig sein. Es weist hierfür eine ein Gewebe tragende dichte Kunststoffolie oder Latexschicht Löcher auf, die nur bei Belastung des Sitzes offen sind. Vorzugsweise wird bei Belastung aus einer Luftkammer Luft durch die Löcher gedrückt.

0110144

SC P+G-350 E

Schaeffler Teppichboden GmbH, 8600 Bamberg

S i t z a u f b a u

Die Erfindung betrifft einen Sitzaufbau, insbesondere für Kraftfahrzeuge, mit einem luftdurchlässigen, federelastischen Kern, auf dem als Oberschicht, insbesondere ein elastisches, textiles Gewebe, Gewirke oder Gestrick, angeordnet ist, an der rückseitig eine elastische Folie vorgesehen ist.

Sitze von Nutzfahrzeugen, wie beispielsweise Traktoren, Baufahrzeugen oder Lastkraftwagen, sollen in der Weise wasserdicht sein, daß beim Abwaschen und beim Beregnen in den Kern kein Wasser eintritt. Solche Sitze sind deshalb mit einer wasserdichten Kunststoffolie überzogen. Dabei wird in Kauf genommen, daß die Sitzfläche luftun-

- 2 -

durchlässig und damit nicht atmungsaktiv ist. Dies ist für den Benutzer unangenehm.

Wasserdichte Sitze werden häufig so hergestellt, daß die dichte Kunststoffolie, beispielsweise PVC- oder PU-Folie, mit einer PU-Masse hinterschäumt wird. Dabei wirkt sich die Luftundurchlässigkeit der Kunststoffolie günstig aus. Denn sie verhindert, daß die aufschäumende PU-Masse auf die Oberfläche austreten kann.

In dem DE-GM 17 24 170 ist eine Sitzauflage beschrieben, die einerseits luftdurchlässig, andererseits jedoch nicht wasserdurchlässig sein soll. Dies soll durch sehr kleine Löcher erreicht werden. Entsprechend schlecht ist die Durchlüftung.

Belüftete Sitze sind auch in dem DE-GM 75 07 389 und in der DE-OS 16 54 400 beschrieben.

Aufgabe der Erfindung ist es, einen Sitzaufbau der eingangs genannten Art vorzuschlagen, der einerseits wasserdicht ist und andererseits bei der Benutzung luftdurchlässig ist.

Erfindungsgemäß ist obige Aufgabe dadurch gelöst, daß die elastische Folie wenigstens im Sitz-Mittelbereich mit Löchern perforiert ist, die bei infolge Belastung des Sitzes gespannter Oberschicht offen sind und die bei entlastetem Sitz geschlossen sind, und daß die Löcher mit dem federelastischen Kern in luftleitender Verbindung

- 3 -

stehen und daß die Folie so auf dem Kern angeordnet ist, daß bei entspanntem Kern ihre Löcher geschlossen sind und daß bei gespanntem bzw. belastetem Kern die Folie dem entspannten Zustand gegenüber gedehnt ist.

Ist der Sitz unbelastet, dann sind die Löcher infolge der Elastizität der Folie zugezogen, so daß die Oberschicht gewaschen werden kann, ohne daß Wasser in den Kern eindringt. Regnet es auf den Sitz, fließt das Wasser auf der Oberschicht oberflächlich ab, ohne in den Kern einzudringen. Sitzt der Benutzer auf dem Sitz, dann ist dadurch die Oberschicht so gedehnt, daß die Löcher der Folie offen sind, so daß die Oberschicht nun luftdurchlässig und damit atmungsaktiv ist.

Eine vorteilhafte Verbindung zwischen dem Kern und der Oberschicht ist vorzugsweise dadurch gebildet, daß zwischen dem Kern und der Folie eine offenzellige PU-Zwischenschicht aufgeschäumt ist.

In bevorzugter Weiterbildung der Erfindung ist unterhalb des Kerns eine Luftkammer vorgesehen, aus der bei Belastung des Sitzes Luft durch den Kern und gegebenenfalls die Zwischenschicht durch die Löcher austritt und die sich bei Entlastung des Sitzes mit Luft füllt. Damit ist erreicht, daß bei Auf- und Abbewegungen des Benutzers auf dem Sitz Luft zwangsweise durch die Löcher gepreßt wird. Dies verbessert den Sitzkomfort.

Weitere vorteilhafte Ausgestaltungen der Erfindung ergeben sich aus der folgenden Beschreibung von Ausführungsbeispielen. In der Zeichnung zeigen:

- 4 -

- 4 -

Figur 1    einen Sitzaufbau im Schnitt,

Figur 2    eine gegenüber Figur 1 vergrößerte Teilansicht
           der Oberschicht des Sitzaufbaus, unbelastet,

Figur 3    eine Ansicht entsprechend Figur 2 bei belastetem
           Sitz,

Figur 4    ein zweites Ausführungsbeispiel eines Sitzaufbaus,

Figur 5    ein drittes Ausführungsbeispiel eines Sitzaufbaus und

Figur 6    ein viertes Ausführungsbeispiel eines Sitzaufbaus.


In eine starre Trägerschale 1 ist ein Sitz 2 eingesetzt.
Der Sitz 2 weist einen Polsterkern 3 auf. Dieser besteht
aus einem Gummihaarblock oder einem PU-Formschaumkörper.
Der Polsterkern 3 ist luftdurchlässig. Besteht er aus
einem luftundurchlässigen Material, dann ist er mit
vertikalen Luftschächten 4 versehen.


Auf den Polsterkern 3 ist eine offenzellige PU-Zwischenschicht 5 aufgeschäumt. Diese hält an ihrer Oberseite
eine Oberschicht 6.


Die Verbindung zwischen dem Polsterkern 3 und der Oberschicht 6 wird durch die Zwischenschicht 5 geschaffen.
Es wird hierfür eine Schaumstoffmatte ein- oder beidseitig mit einer Schaumstoffmasse bestrichen und auf den
Kern 3 gelegt. Anschließend wird die Oberschicht 6 aufgelegt. In einer Form wird sodann der die Schaumstoffmatte tränkende Schaumstoff zum Aufschäumen gebracht.
Damit ist einerseits eine sichere Verbindung zwischen

- 5 -

- 5 -

der Oberschicht 6 und dem Polsterkern 3 geschaffen. Andererseits bildet die Zwischenschicht 5 eine weiche Zwischenlage. Die Zwischenschicht und damit auch die Oberschicht können auch musterbildende Einprägungen aufweisen.

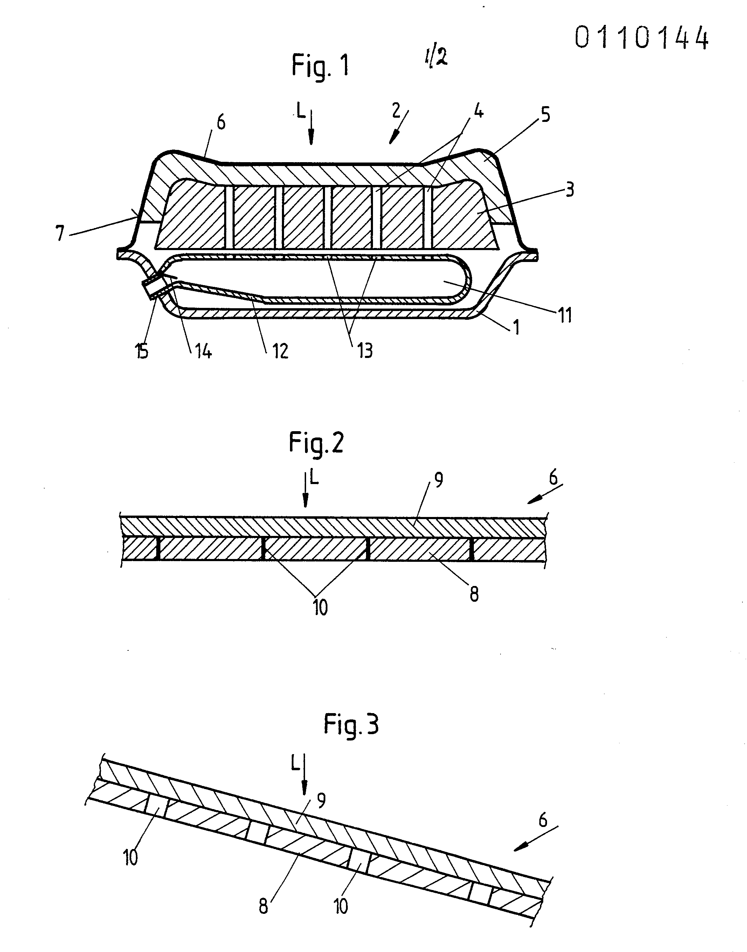

Die Oberschicht 6 geht an ihrem Rand 7 optisch in die Trägerschale 1 über. Ihr Rand 7 ist beispielsweise an die Trägerschale 1 angeklebt (vgl. Figur 1).

Die Oberschicht 6 besteht aus einer PU-Folie 8, die auf ein textiles, elastisches Gewebe 9 aufkaschiert ist. Die Folie 8 ist mit Löchern 10 versehen. Diese sind in die Folie 8 entweder vor oder nach dem Aufkaschieren auf das Gewebe 9 mittels Nadeln hergestellt. Der Durchmesser der Löcher 10 ist so bemessen, daß diese infolge der Elastizität der Folie 8 geschlossen sind (vgl. Figur 2), solange die Folie 8 nicht gedehnt ist. Beim Dehnen der Folie 8 (vgl. Figur 3) sind die Löcher 10 offen. Die Löcher 10 werden vorzugsweise in die gespannte Oberschicht 6 gestanzt, wobei sie sich dann bei entspannter Folie 8 wasserdicht schließen.

Die Löcher 10 sind im Mittelbereich des Sitzes 2, also an der Sitzfläche vorgesehen.

Unterhalb des Polsterkerns 3 ist bei den Ausführungsbeispielen eine Luftkammer 11 vorgesehen. Beim Ausführungsbeispiel nach Figur 1 liegt in der Trägerschale 1 unterhalb des Kerns 3 ein hohles Gummikissen 12. Dessen

- 6 -

- 6 -

Oberseite weist zu den Luftschächten 4 gerichtete Durchbrechungen 13 auf. Am Gummikissen 12 ist eine Ventilklappe14 angeordnet, welche über einen durch die Trägerschale 1 ragenden Rohrstutzen 15 mit der Umgebung in
Verbindung steht.

Die Wirkungsweise des Sitzes nach Figur 1 ist etwa
folgende:

Solange der Sitz unbelastet ist, ist die Folie 8 nicht
gedehnt, so daß ihre Löcher 10 geschlossen sind. In
diesem Zustand ist die Oberschicht 6 in der Weise wasserdicht, daß auf sie auftreffendes Wasser nicht in den
Polsterkern 3 eindringt. Die Oberschicht 6 kann also zu
Reinigungszwecken abgewaschen werden, oder auch dem
Regen ausgesetzt sein, ohne daß der Polsterkern 3 durchnäßt.

Wird der Sitz in Pfeilrichtung L belastet, dann dehnt
sich die Folie 8, wodurch die Löcher 10 öffnen. Gleichzeitig wird durch die Belastung das Gummikissen 12
zusammengedrückt, so daß die Ventilklappe 14 schließt.
Damit tritt aus der Luftkammer 11 des Gummikissens 12
Luft durch die Durchbrechungen 13 in die Luftschächte 4.
Diese Luftströme gehen durch die Zwischenschicht 5 hindurch und treten aus den Löchern 10 aus. Die Sitzfläche
ist damit intensiv belüftet. Wird der Sitz anschließend
entlastet, dann stellt sich das Gummikissen 12 zurück,
wobei die Ventilklappe 14 geöffnet wird und sich die
Luftkammer 11 und die Luftschächte 4 erneut füllen.

- 7 -

Es wird also bei Belastungswechseln, die beispielsweise
Folgen der Schwingungsbewegung des Fahrzeugs, in dem der
Sitz eingebaut ist, sind, stoßweise Luft durch die
Löcher 10 gedrückt.

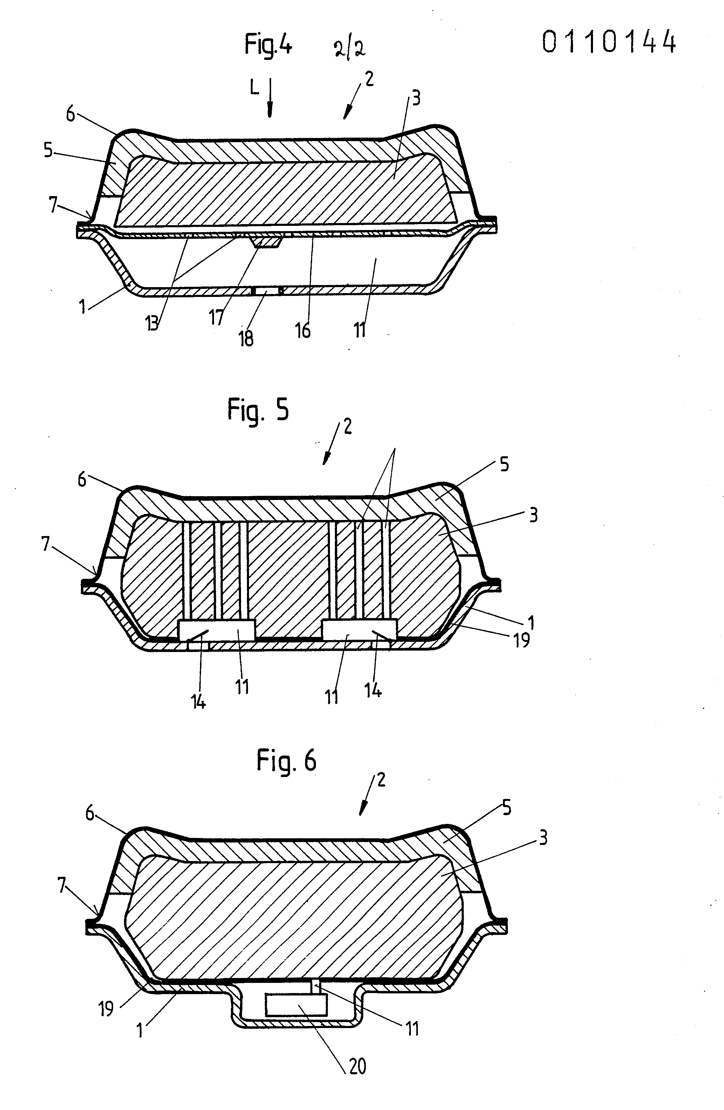

Beim Ausführungsbeispiel nach Figur 4 ist anstelle des
Gummikissens 12 eine Gummimatte 16 mit Durchbrechungen 13 vorgesehen. Diese schließt dicht an die Trägerschale 1 an. An zentraler Stelle der Gummimatte 16
ist ein konisch zulaufender Stöpsel 17 oberhalb einer
Öffnung 18 der Trägerschale 1 angeordnet. Im entlasteten
Zustand läßt der Stöpsel 17 die Öffnung 18 offen. Im
belasteten Zustand schließt der Stöpsel 17 die Öffnung 18.

Die Wirkungsweise des Ausführungsbeispiels nach Figur 4
gleicht im wesentlichen der des Ausführungsbeispiels
nach Figur 1. Bei Belastung des Sitzes öffnen sich die
Löcher 10 und der Stöpsel 17 schließt die Öffnung 18,
so daß Luft aus den Löchern 10 austritt. Ist der Polsterkern 3 insgesamt luftdurchlässig, dann ist dafür Sorge
getragen, daß seitlich aus dem Sitz Luft nicht entweicht.
Am einfachsten ist dies dadurch erreicht, daß die Polyurethanfolie 8 nur in ihrem Mittelbereich mit Löchern 10
versehen ist. Wie aus Figur 4 ersichtlich, ist der
Rand 7 mit der Gummimatte 16 dicht verbunden.

Beim Ausführungsbeispiel nach Figur 5 sind die Luftkammern 11 unten am Kern 3 ausgebildet. Unten ist der
Kern 3 mit einer luftdichten Folie bedeckt, die mit der
Oberschicht 6 verbunden ist. Die Ventilklappe 14 sitzt

- 8 -

- 8 -

an der Folie 19. Die Folie 19 kann entfallen, wenn die Trägerschale 1 selbst luftdicht ist und mit dem Rand 7 luftdicht verbunden ist.

Die Funktionsweise des Ausführungsbeispiels nach Figur 5 entspricht der bereits beschriebenen Funktionsweise. In die Luftkammer 11 wird bei Entlastung aufgrund der dem Kern 3 eigenen Rückstellkraft Luft gesaugt.

Beim Ausführungsbeispiel nach Figur 6 ist in die Trägerschale 1 ein Kompressor 20 eingebaut, welcher bei Belastung des Sitzes 2 Luft durch den Polsterkern 3 und die geöffneten Löcher 10 drückt.

Im Rahmen der Erfindung liegen zahlreiche weitere Ausführungsbeispiele, die sich auch durch Kombination der beschriebenen Teilmerkmale ergeben. Bei den beschriebenen Ausführungsbeispielen wird eine gerichtete Luftströmung erzeugt. Für eine Belüftung kann es jedoch auch genügen, wenn bei Belastung lediglich miteinander in luftleitender Verbindung stehende Löcher 10 der Folie 8 geöffnet werden.

Die Folie 8 kann bei einem weiteren Ausführungsbeispiel eine Latexschicht sein. Die Kunststoffolie oder Latexschicht kann bei einem weniger komfortablen Sitzaufbau selbst die Oberschicht bilden.

- 9 -

A n s p r ü c h e

1.    Sitzaufbau, insbesondere für Kraftfahrzeuge, mit einem luftdurchlässigen, federelastischen Kern, auf dem als Oberschicht, insbesondere ein elastisches, textiles Gewebe, Gewirke, oder Gestrick, angeordnet ist, an der rückseitig eine elastische Folie vorgesehen ist, dadurch gekennzeichnet, daß die elastische Folie (8) wenigstens im Sitz-Mittenbereich mit Löchern (10) perforiert ist, die bei infolge Belastung des Sitzes gespannter Oberschicht (6) offen sind und die bei entlastetem Sitz (2) geschlossen sind, daß die Löcher (10) mit dem federelastischen Kern (3) in luftleitender Verbindung stehen und daß die Folie (8) so auf dem Kern (3) angeordnet ist, daß bei entspanntem Kern (3) ihre Löcher (10) geschlossen sind und daß bei gespanntem bzw. belastetem Kern (3) die Folie (8) dem entspannten Zustand gegenüber gedehnt ist.

2.    Sitzaufbau nach Anspruch 1, dadurch gekennzeichnet, daß sich die Löcher (10) durch das textile Gewebe, Gewirke oder Gestrick (9) erstrecken.

3.    Sitzaufbau nach einem der vorhergehenden Ansprüche, dadurch gekennzeichnet, daß zwischen dem Kern (3) und der Folie (8) eine offenzellige Zwischenschicht (5) aufgeschäumt ist und daß die Zwischenschicht (5) die Oberschicht (6) mit dem Kern (3) verbindet.

4.    Sitzaufbau nach einem der vorhergehenden Ansprüche,

- 10 -

dadurch gekennzeichnet, daß die Folie (8) eine PU-Folie oder Latexschicht ist.

5. Sitzaufbau nach einem der vorhergehenden Ansprüche, dadurch gekennzeichnet, daß der Kern (3) seitlich luftdicht abgeschlossen ist, und daß unterhalb des Kerns (3) eine luftdichte Folie (19) oder Schale vorgesehen ist.

6. Sitzaufbau nach einem der vorhergehenden Ansprüche, dadurch gekennzeichnet, daß eine Luftkammer (11) vorgesehen ist, aus der bei Belastung des Sitzes (2) Luft durch den Kern (3) und gegebenenfalls die Zwischenschicht (5) durch die Löcher (10) austritt und die sich bei Entlastung des Sitzes (2) mit Luft füllt.

7. Sitzaufbau nach Anspruch 6, dadurch gekennzeichnet, daß die Luftkammer (11) von einem unter dem Polsterkern (3) angeordneten hohlen Gummikissen (12) gebildet ist.

8. Sitzaufbau nach Anspruch 6, dadurch gekennzeichnet, daß die Luftkammer (11) von einer in einer luftdichten Trägerschale (1) angeordneten Gummimatte (16) gebildet ist.

9. Sitzaufbau nach Anspruch 5 und 6, dadurch gekennzeichnet, daß die Luftkammer (11) im Kern (3) selbst ausgebildet ist.

10. Sitzaufbau nach einem der vorhergehenden Ansprüche 6 bis 9, dadurch gekennzeichnet, daß an der Luft-

0110144

- 11 -

kammer (11) eine Ventilklappe (14) angeordnet ist.

11.    Sitzaufbau nach einem der vorhergehenden Ansprüche 6 bis 9, dadurch gekennzeichnet, daß an einer starren Trägerschale (1) eine Öffnung (18) vorgesehen ist, die bei belastetem Kern (3) mittels eines an diesem angeordneten Stöpsels (17) geschlossen ist.

Fig. 1

Fig. 2

Fig. 3

Fig.4    2/2                    0110144

Fig. 5

Fig. 6